# EUROPEAN PATENT SPECIFICATION

(11) **EP 1 097 627 B1**
(45) Date of publication and mention of the grant of the patent: **08.03.2006**
(21) Application number: 00309383.8
(22) Date of filing: 25.10.2000
(51) Int. Cl.: A01F 15/07

(54) **Unloading device for bale wrapper apparatus**
Entladungsvorrichtung für ein Ballenwickelgerät
Dispositif de décharge pour un appareil d'emballage de balles

(30) Priority: 04.11.1999 GB 9926097
(43) Date of publication of application: 09.05.2001
(73) Proprietor: Kverneland Naerbo AS, 4350 Naerbo (NO)
(72) Inventor: Haugstad, Jan, N-4350 Naerbo (NO)
(74) Representative: Orr, William McLean

(56) References cited:
- EP-A- 0 910 941
- GB-A- 2 305 648

## Description

This invention relates to an unloading device for a bale wrapper apparatus.

Bale wrappers are well known for use in applying stretched film wrapping to a compressed bale of agricultural crop material, such as straw, grass or hay, and the purpose of the wrapping is to protect the bale contents from exposure to the ambient external atmosphere e.g. to exclude air and moisture from coming into contact with the bale contents, which otherwise would be liable to damage the bale contents.

This will be particularly the case when a newly mown grass bale is being allowed to ferment to form silage while enclosed in substantially air tight manner within the stretch film wrapping.

Bale wrappers are of the rotating turntable type, and also of the orbiting satellite type, and both of which will be well known to those of ordinary skill in the art, and which therefore need not be described in detail herein.

A bale wrapper has a table on which a cylindrical or rectangular cross section bale can be loaded, and then the table causes the bale to rotate generally about its longitudinal axis, simultaneously with application of stretch film wrapping around the rotating bale. In the case of a rotating turntable type of bale wrapper, a film dispenser reel is held in a fixed position relative to the frame of the apparatus, and the table rotates about a generally vertical axis, and withdraws film from the dispenser reel so as to apply helical overlapping layers of film wrapping to the bale. In the case of an orbiting satellite type of bale wrapper, the table remains fixed, but rotates the bale about its axis, simultaneously with a film dispenser reel carrying orbital movement in a generally horizontal plane around the rotating bale, so that film can be withdrawn from the reel and applied as helically overlapping layers of wrapping to the bale.

After completion of wrapping of the bale, it is then unloaded from the wrapper, and which usually takes place by tipping the table from a horizontal position in which it receives and rotates the bale during bale wrapping, and a tilted position in which the wrapped bale can be discharged from the table under the action of gravity. The wrapped bale can then be discharged onto a loading platform of a vehicle, or onto some other suitable supporting surface e.g. the ground.

A bale wrapping table usually comprises two horizontal and spaced apart rollers, onto which a bale can be loaded, and one or more slack belts may be taken over the rollers to assist in a) the support of the bale and b) in the rotation of the bale. The tilting of the table, when wrapping is completed, is carried out in a direction perpendicular to the axes of the rollers, and therefore the wrapped bale is also discharged in a direction generally perpendicular to the bale axis.

In the case of discharge of a wrapped bale onto the ground (and which may be temporary storage in the field for subsequent collection by a loading trailer, or permanent storage at a suitable site) the wrapped bale rests on the ground with its axis generally parallel to the surface of the ground.

When the bale is cylindrical in shape (and supported on a flat surface), it will tend to change its shape over a period of time, and especially when the bale contents are grass which is fermenting to form silage. When a cylindrical bale changes its shape, there is a risk that the helically overlapping layers of stretched film will tend to separate, thereby creating air gaps which will allow ingress to ambient air and moisture, and which may cause damage to the bale contents, and particularly when silage is being formed.

Therefore, it is recognised that it would be desirable to be able to stack bales on their ends i.e. substantially perpendicular to the supporting surface.e.g. the ground, and which will have the advantage of generating substantially uniform vertical load to the bale, and thereby minimising the risk of the bale losing its shape over a period of time. A further potential advantage of stacking bales on their ends e.g. a circular end face in the case of a cylindrical bale, is that the usual method of wrapping a bale involves application of helically overlapping layers, around the axis of the bale, and which usually provides up to eight overlapping layers at each end face, compared with only a series of two adjacent overlapping layers over the cylindrical surface of the bale. Therefore, the end faces are better able to withstand possible penetration e.g. by ground stubble or stones in the case of the end face engaging the ground, and by birds pecking at the upper exposed end face. The document GB-A-2 305 648 discloses a bale wrapper with a receving cradle which discharges the bales on the end surface.

The present invention therefore seeks to provide a novel arrangement of bale-unloading device, which is operative to transfer a wrapped bale from a wrapping table (when the bale axis extends substantially parallel to the rollers of the bale table), to a storage position in which one end face of the bale is supported on a flat supporting surface e.g. the ground or a loading platform, and with the axis of the bale extending generally perpendicularly upwardly of the support surface.

The invention therefore provides a receiving platform, to which a wrapped bale can be transferred, and which initially occupies a receiving position extending generally parallel to the ground surface, and which is adjustable to a discharging position in which the bale, when supported by the platform, is able to move under gravity to a stacked position on a supporting surface in which the bale axis extends substantially perpendicular to the supporting surface.

However, to minimise the risk of frictional forces being generated between the film wrapping and the platform, during the discharging process, means is provided to facilitate discharge of the bale to its stacked position, by at least minimising relative slidable movement between the film wrapping of the bale and the supporting platform.

According to the invention there is provided a bale wrapper apparatus which comprises:
a wrapping table including at least two spaced apart parallel rollers for receiving a bale and operative to rotate the bale generally about its axis during wrapping with stretched film;
holding means for holding a reel of stretchable plastics film;
means for applying relative rotation between said holding means and said table about an upright axis extending generally perpendicular to the axis of the bale so that wrapping of the bale can take place;
means for tilting the table in a direction perpendicular to the axes of the rollers in order to discharge a wrapped bale from the table; and
a receiving cradle mounted on the frame of the apparatus so as to receive the wrapped bale when the latter is discharged from the table, said bale being movable in a direction generally perpendicular to its axis so as to be received by the cradle:
   in which:
   a) the receiving cradle is adjustable between a bale-receiving position in which the bale axis extends substantially parallel to a support surface on which the apparatus is standing, and an inclined discharge position in which the wrapped bale can move generally lengthwise of its axis in order to take-up a stacked end-on position extending upwardly from the support surface; and
   b) the cradle includes support means for supporting the bale when it is received by the cradle, said support means being movable with the cradle to the discharge position, and also being movable relative to the frame of the cradle in a direction parallel to and simultaneously with the lenghtwise movement of the bale to the stacked position, in order to minimise relative sliding movement between the surface of the wrapped bale and the support means, and thereby to assist the movement of the bale.

Preferably, the support means takes the form of a platform which is moveable in the direction of movement of the bale to the stacked end-on position.

Thus, the platform of the cradle can support the wrapped bale when it is discharged from the table, and usually the platform will be substantially horizontal at this stage (assuming the apparatus is standing on level ground). The cradle then is adjustable to the inclined discharge position, and the platform moves with the cradle in order to tilt the bale and thereby present one end of the bale to the ground. As the bale tilts, the effect of gravity increases, and the bale is then able to move downwardly and lengthwise to take up the stacked position.

It will be evident that the contact between the wrapped bale and the platform will be via the stretched film wrapping on the bale and, to avoid tearing or damage to the film during the downward movement of the bale to the stacked position, the platform is movable with the bale.

Preferably, the cradle has a mounting frame by which the cradle is mounted on a fixed part of the frame of the apparatus, and the cradle frame may include a slidable mounting for the cradle which allows movement of the cradle (and platform) to assist the unloading movement of the wrapped bale to the end-on stacked position.

The platform can take any suitable form to receive and support the wrapped bale, and in a particularly simple arrangement may comprise a flat (or partly curved) plate guided to carry out sliding movement relative to the cradle frame as the wrapped bale is discharged. Rollers, runners or slides may be used to guide the sliding movement of the platform, and preferably resilient means is provided to resist this sliding movement, and to return the platform to a starting position after the bale has been discharged. The resilient means may comprise a spring arrangement e.g. tension springs, or could be a pneumatic or hydraulic arrangement.

The cradle preferably includes (in addition to the platform), a support frame shaped to receive and to hold the bale, and such support frame is movable with the platform during the unloading movement of the bale.

Bale wrappers can have different heights of the table above the ground, and therefore in cases of higher tables, it may be desirable to provide a cradle which is pivotally mounted on the wrapper frame to move between a raised position alongside the table to facilitate discharge of the bale from the table to the cradle, and a lowered position on or close to the ground surface. It is only after lowering to the lowered position, that the tilting movement of the cradle can take place in order to discharge the wrapped bale to its end-on stacked position.

As an alternative to a support platform, the cradle may be provided with support means in the form of a roller unit.

Preferred embodiments of bale wrapper apparatus according to the invention will now be described in detail, by way of example only, with reference to the accompanying drawings, in which:
Figure 1 is a plan view of a first embodiment of rotating turntable type of bale wrapper apparatus, and having a receiving cradle mounted thereon to receive a wrapped bale from the turntable, and to discharge the wrapped bale to an end-on upwardly extending stacked position on the ground or other support surface;
Figure 2 is a side view corresponding to Figure 1;
Figure 3 is a rear view of the apparatus, showing the discharging movement of the cradle;
Figure 4 is a side view, similar to Figure 2, showing an alternative arrangement in a further embodiment of the invention, having a table which is higher above the ground, and a means of adjusting the receiving cradle to a raised receiving position, to facilitate transfer of a wrapped bale from the higher table to the cradle;
Figure 5 is a schematic side view of an alternative arrangement of receiving cradle, in a bale-receiving position; and,
Figure 6 is a similar view, but showing the cradle in a tilted bale-discharge position.

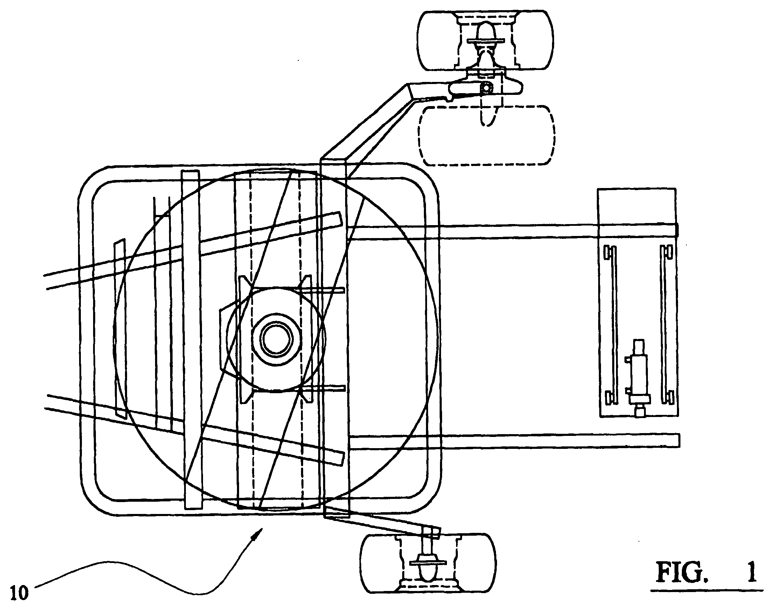

Referring first to Figures 1 to 3 of the drawings, a rotating turntable type of bale wrapper apparatus is shown, designated generally by reference 10, and having a wrapping table 11 which is provided with a pair of spaced apart parallel rollers 12, and slack belts 13, which receive a cylindrical bale 14 (the bale 14 will usually be loaded onto the table 11 by a side mounted lifting cradle, or by other means which are not shown), and the rollers 12 and belts 13 serve to rotate the bale 14 generally about its axis during wrapping with stretched film.

Holding means (not shown) is provided to hold a reel of stretchable plastics film, and means is provided to apply relative rotation between the holding means and the table 11 about an upright axis extending generally perpendicular to the axis of the bale 14, so that wrapping of the bale can take place. In the illustrated embodiment, this relative rotation is achieved by arranging for the table 11 to be of the rotating turntable type. Other means of achieving this comprises use of orbiting satellite types of bale wrappers.

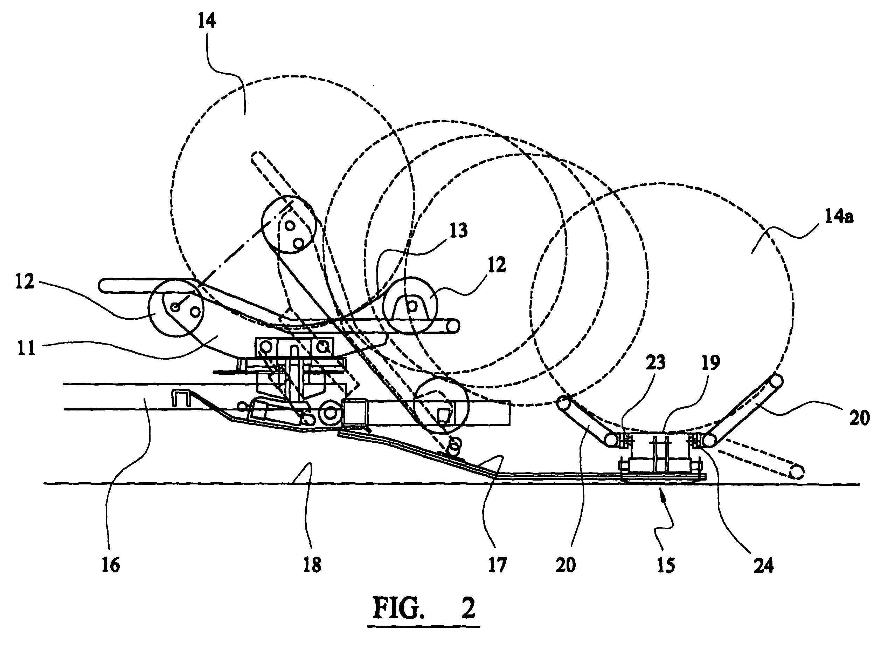

After completion of wrapping of the bale 14 with stretched film, tilting means is operated to tilt the table 11 in a direction perpendicular to the axes of the rollers 12 in order to discharge the wrapped bale from the table, and Figure 2 shows successive stages of this lateral discharging movement of the bale 14.

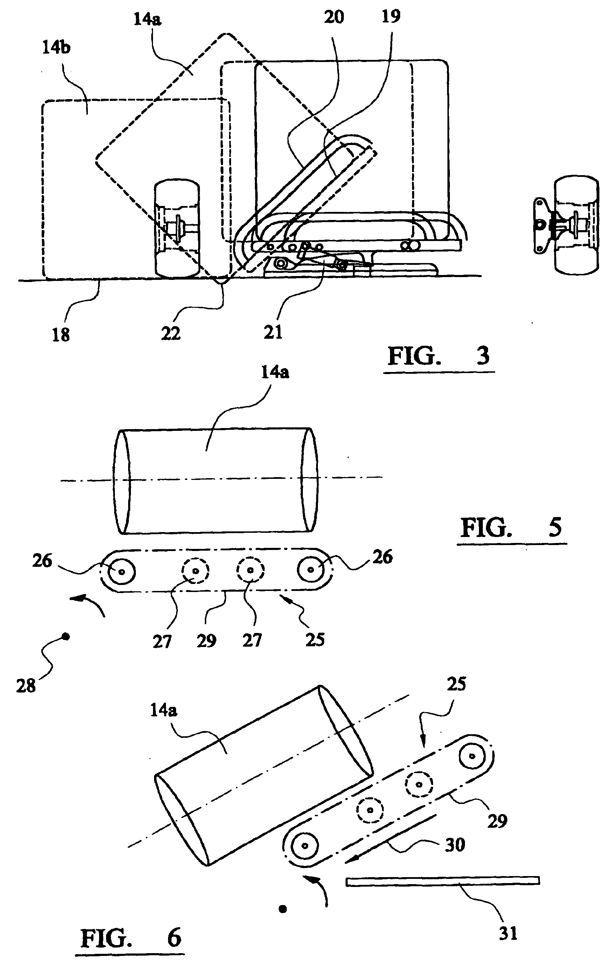

A receiving cradle 15 is mounted on the frame 16 of the apparatus 10 so as to receive the wrapped bale, shown by reference 14a in Figures 2 and 3 and as will be evident from Figure 2 the bale moves in a direction generally perpendicular to its axis so as to be received by the cradle 15.

The receiving cradle 15 is carried by a mounting frame 17 by which it is mounted on the fixed frame 16 of the apparatus 10, and it will be noted that the receiving cradle 15 is located in a bale-receiving position, as shown in Figure 2, which is close to or supported on the ground surface 18. The cradle 15 is adjustable from this bale receiving position, (in which the bale axis extends substantially parallel to the supporting ground surface 18 on which the apparatus 10 is standing), and an inclined discharge position, as shown in Figure 3, in which the wrapped bale 14a can move generally lengthwise of its axis in order to take-up an end-on stacked position extending upwardly away from the support surface, as shown by the outline of the wrapped bale shown by reference 14b in Figure 3.

The cradle 15 includes support means for supporting a wrapped bale, and in this embodiment the support means takes the form of a platform 19, and a support frame 20 which is shaped to receive and to hold the wrapped bale 14a, as will be apparent from Figure 2. The platform 19 and support frame 20 therefore can support the wrapped bale 14a, when it is received by the cradle 15 from the table 11, and in this receiving position of the cradle 15 shown in Figure 2, the axis of the wrapped bale 14a extends substantially parallel to the ground surface 18. Means is provided to tilt the platform 19 and support frame 20 to an inclined discharge position, as shown in Figure 3, and such means preferably comprises a piston/cylinder device 21. As the platform 19 tilts upwardly from a horizontal receiving position, the gravity effect applied to the wrapped bale 14a increases, and therefore the wrapped bale 14a carries out a combined movement of a) anticlockwise upward tilting movement about its lower corner 22, as shown in Figure 3, together with downwardly inclined movement towards the supporting ground surface 18.

The contact between the outer surface of the wrapped bale 14a and the support platform 19 and support frame 20 is via the stretch film wrapping, and bearing in mind the substantial weight of a typical wrapped bale e.g. typically about one tonne, the pressure contact between the film wrapping and the contact surfaces is substantial. Therefore, as the wrapped bale moves to an inclined position, there will be a tendency for the wrapped bale to slide downwardly towards contact with the ground. However, to avoid risk of tearing or other damage being done to the film wrapping, the mounting of the platform 19 and support frame 20 on the frame of the cradle 15 is such that these components can move with the bale 14a as the bale 14a moves downwardly under gravity towards an end-on stacked position.

The flat platform 19 and shaped support frame 20 therefore are mounted on the frame of the cradle 15 in such a way that they can carry out limited sliding movement relative thereto, as the wrapped bale is discharged. Rollers, runners or sliders may be used to guide the sliding movement, and a set of guide rollers 23 is shown running in guide ways 24 in Figure 2.

Also, resilient means is provided to resist the sliding movement of the platform 19 and support frame 20, and which conveniently takes the form of an arrangement of tension springs (not shown in detail). This serves to provide resilient resistance to sliding movement, but returns the platform 19 and support frame 20 to a starting position, after completion of discharge of the wrapped bale to the stacked position.

The tilting movement of the cradle 15 therefore facilitates a gentle action on the wrapped bale 14a, which carries out a tilting and downward movement to engage the support 18, initially via its leading corner edge 22, assisted by the sliding movement of the platform 19 and support frame 20 with it, and further tilting movement of the cradle then moves the wrapped bale 14a to the end-on upwardly extending stacked position shown by reference 14b.

This is a stable stacked position of the bale, and with helically wound stretch film overlapping layers applied to the bale, it is the bale ends which have the most layers of film overlapping each other, and therefore the end of the bale engaging the ground is well able to resist any possible penetration by stubble, stones etc., which might be present in the supporting surface. The upper end face of the bale is also able to resist penetration by birds pecking at it. Furthermore, stacking of a cylindrical bale in an upright position is a more stable arrangement, with less risk of the cylindrical shape of the bale contents changing over a period of time.

The embodiment 10 shown in Figures 1 to 3 has a receiving cradle 15 in a bale receiving position which is close to the ground, and which allows gravity discharge of the wrapped bale from the table, as shown in Figure 2, without difficulty. This is because the height of the table 11 relative to the ground surface 18 is small.

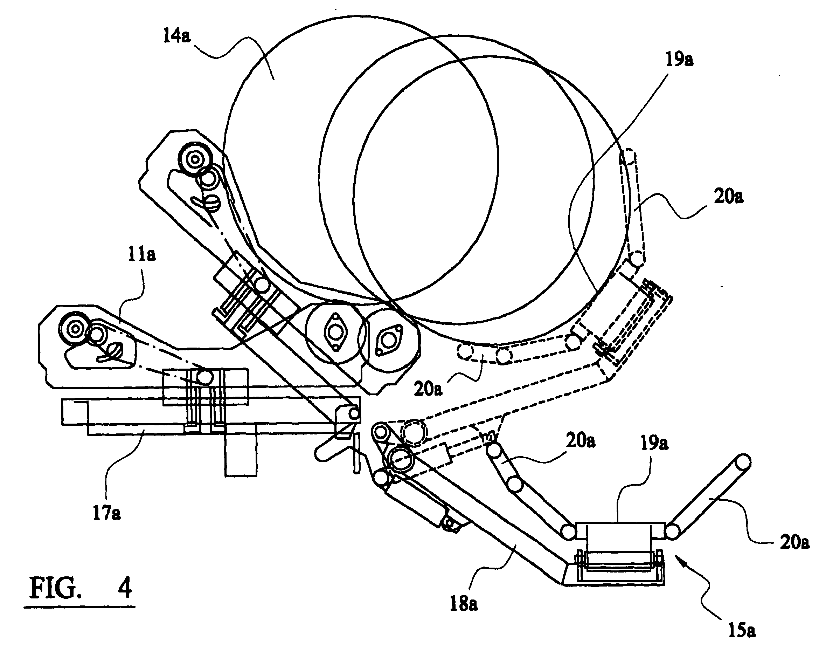

However, in some circumstances, bale wrappers can be provided with tables which are located at a greater height above the ground, as shown by table 11 a in Figure 4, and therefore a receiving cradle 15a is provided, which is pivotally mounted on the apparatus frame 17a via pivoted arm 18a. The cradle 15a therefore is upwardly pivotable to a raised receiving position, shown by dashed outline in Figure 4, which provides easy transfer of wrapped bale 14a to the support frame 20a and platform 19a of cradle 15a.

The cradle 15a can then be lowered from the raised position shown in dashed outline, to the position shown in full lines in Figure 4, in which it is close to, and just above the grounds surface. Tilting movement of the cradle 15a can then take place, similar to that described above for cradle 15 shown in Figures 1 to 3.

The embodiments shown in Figures 1 to 4 provide a receiving cradle with a support means for supporting the bale which takes the form of a platform 19, 19a, and an associated support frame 20, 20a. Such support means is movable with the cradle to the discharge position, and the platform is also movable simultaneously with the movement of the bale to the stacked position, in order to minimise relative sliding movement between the surface of the wrapped bale and the support surface, and thereby assist the movement of the bale.

In the specific embodiment illustrated, the platform itself moves in the direction of movement of the bale to the stacked position, simultaneously with lengthwise movement of the bale, thereby to minimise friction between the surface of the bale and the surface of the platform.

However, it should be understood that the invention contemplates further types of support means provided on the cradle, such further type of support means being movable simultaneously with movement of the bale to the stacked position, in order to minimise relative sliding movement between the surface of the wrapped bale and the support surface. There is shown schematically in Figures 5 and 6 a number of preferred alternative types of support means which may be utilised in the performance of the invention.

Referring now to Figure 5, this is a schematic view taken in the direction perpendicular to the axis of the wrapped bale 14a, and which is shown after transfer from the table to the cradle. Instead of a platform 19 or 19a as shown in Figures 1 to 4, support means provided on the cradle takes the form of a roller unit 25 comprising at least two parallel rollers 26 arranged with their axes extending substantially perpendicular to the axes of the rollers 12 of the table. If required, the roller unit 25 may include additional parallel rollers 27, as shown in dotted outline. The cradle is designed so as to be able to tip the roller units 25 in an anti-clockwise direction about pivot point 28, as shown in Figure 5, in order to initiate unloading movement of the wrapped bale 14a. As the wrapped bale 14a starts its unloading movement in a generally lengthwise direction, friction between the surface of the wrapped bale and the surface of the rollers 26 (and 27 if provided) is minimised, in that the rollers are freely rotatable, and thereby to assist the unloading movement of the bale to take-up the stacked end-on position.

To further facilitate the unloading movement, the roller unit 25 may include an endless belt 29 taken in a loop around the rollers of the roller unit 25. This is one preferred additional feature, although not wholly essential.

A further alternative feature, and / or additional feature, is to mount the entire roller unit 25 on the cradle in such a way that the entire roller unit 25 also can move in the direction of the arrow 30 shown in Figure 6, relative to the general frame 31 of the cradle, thereby to further assist the unloading movement of the wrapped bale.

## Claims

1. A bale wrapper apparatus (10) which comprises:
a wrapping table (11) including at least two spaced apart parallel rollers (12) for receiving a bale (14) and operative to rotate the bale generally about its axis during wrapping with stretched film;
holding means for holding a reel of stretchable plastics film;
means for applying relative rotation between said holding means and said table (11) about an upright axis extending generally perpendicular to the axis of the bale (14) so that wrapping of the bale can take place;
means for tilting the table (11) in a direction perpendicular to the axis of the rollers (12) in order to discharge a wrapped bale (14a) from the table (11); and
a receiving cradle (15) mounted on the frame (16) of the apparatus (10) so as to receive the wrapped bale (14a) when the latter is discharged from the table (11), said bale (14a) being movable in a direction generally perpendicular to its axis so as to be received by the cradle (15), and the receiving cradle (15) being adjustable between a bale-receiving position in which the bale axis extends substantially parallel to a support surface (18) on which the apparatus (10) is standing, and an inclined discharge position in which the wrapped bale (14a) can move generally lengthwise of its axis in order to take-up a stacked end-on position (14b) extending upwardly from the support surface (18):
the cradle (15) includes support means (19, 19a, 25) for supporting the bale (14a) when it is received by the cradle (15) **characterised in that** said support means are movable with the cradle (15) to the discharge position, and also are movable relative to the frame of the cradle (15) in a direction parallel to, and simultaneous with the lengthwise movement of the bale (14a) to the stacked position (14b), in order to minimise relative sliding movement between the surface of the wrapped bale (14a) and the support means (19, 19a, 25), and thereby to assist the movement of the bale.

2. Apparatus according to claim 1, in which the support means comprises a platform (19, 19a) which is movable in the direction of movement of the bale (14a) to the stacked position.

3. Apparatus according to claim 2, in which the cradle (15) has a mounting frame (17) by which the cradle (15) is mounted on a fixed part of the frame (16) of the apparatus (10), and the cradle frame (17) includes a slidable mounting (23, 24) for the platform (19) which allows movement of the platform to assist the unloading movement of the wrapped bale (14a) to the end-on stacked position (14b).

4. Apparatus according to claim 2 or 3, in which the platform comprises a flat or partly curved plate (19) guided to carry out sliding movement relative to the cradle frame (17) as the wrapped bale (14a) is discharged.

5. Apparatus according to claim 4, in which rollers, runners or slides are used to guide the sliding movement of the platform (19), and resilient means is provided to resist this sliding movement, and to return the platform to a starting position after the bale (14a) has been discharged.

6. Apparatus according to claim 5, in which the resilient means comprises a spring arrangement.

7. Apparatus according to any one of claims 1 to 6, in which the cradle (15) includes a support frame (20) shaped to receive and to hold the bale (14a), said support frame (20) being movable with the platform (19) during the unloading movement of the bale (14a).

8. Apparatus according to any one of claims 1 to 7, in which the cradle (15a) is pivotally mounted on the wrapper frame (17a) to move between a raised position alongside the table (11a) to facilitate discharge of the bale (14a) from the table (11a) to the cradle (15a), and a lowered position on or close to the ground surface.

9. Apparatus according to claim 1, in which the support means comprises a roller unit (25) of at least two parallel rollers (26) arranged with their axes extending substantially perpendicular to the axes of the rollers (12) of the table (11).

10. Apparatus according to claim 9, in which an endless belt (29) is taken around the rollers (26) of the roller unit (25).

11. Apparatus according to claim 9 or 10, in which the roller unit (25) is movable relative to the frame (31) of the cradle in a direction (30), when in a tilted discharge position, to facilitate the discharge of the wrapped bale (14a) to the stacked end-on position (14b).

## Patentansprüche

1. Ballenwickelvorrichtung (10), welche umfasst:
einen Wickeltisch (11), welcher wenigstens zwei beabstandete parallele Rollen (12) zur Aufnahme eines Ballens (14) und in Funktion, um den Ballen während eines Wickelns mit gespannter Folie im Allgemeinen um seine Achse zu drehen, umfasst; Haltemittel zum Halten einer Rolle von spannbarer Kunststofffolie;
Mittel zum Anwenden einer Relativdrehung zwischen dem Haltemittel und dem Tisch (11) um eine aufrechte Achse, welche sich im Allgemeinen senkrecht zur Achse des Ballens (14) erstreckt, so dass ein Wickeln des Ballens stattfinden kann;
Mittel zum Verkippen des Tischs (11) in eine Richtung senkrecht zur Achse der Rollen (12), um einen gewickelten Ballen (14a) von dem Tisch (11) zu entladen; und
eine Aufnahmegabel (15), welche an dem Rahmen (16) der Vorrichtung (10) angebracht ist, um so den gewickelten Ballen (14a) aufzunehmen, wenn der letztere von dem Tisch (11) entladen wird, wobei der Ballen (14a) in einer Richtung im Allgemeinen senkrecht zu seiner Achse beweglich ist, um so durch die Gabel (15) aufgenommen zu werden, und wobei die Aufnahmegabel (15) zwischen einer Ballenaufnahmeposition, in welcher sich die Ballenachse im Wesentlichen parallel zu einer Stützfläche (18) erstreckt, auf welcher die Vorrichtung (10) steht, und einer schrägen Entladeposition einstellbar ist, in welcher sich der gewickelte Ballen (14a) im Allgemeinen längs seiner Achse bewegen kann, um eine aufgestapelte Längsposition (14b) einzunehmen, welche sich von der Stützfläche (18) nach oben erstreckt:
die Gabel (15) umfasst Stützmittel (19, 19a, 25) zum Stützen des Ballens (14a), wenn er durch die Gabel (15) aufgenommen wird,
**dadurch gekennzeichnet,**
**dass** die Stützmittel mit der Gabel (15) zu der Entladeposition beweglich sind, und auch relativ zum Rahmen der Gabel (15) in einer Richtung parallel zu und gleichzeitig mit der Längsbewegüng des Ballens (14a) zur aufgestapelten Position (14b) beweglich sind, um eine relative Gleitbewegung zwischen der Oberfläche des gewickelten Ballens (14a) und den Stützmitteln (19, 19a, 25) zu minimieren, und **dadurch** die Bewegung des Ballens zu unterstützen.

2. Vorrichtung nach Anspruch 1, wobei die Stützmittel eine Plattform (19, 19a) umfassen, welche in der Bewegungsrichtung des Ballens (14a) zur aufgestapelten Position beweglich ist,

3. Vorrichtung nach Anspruch 2, wobei die Gabel (15) einen Halterahmen (17) aufweist, durch den die Gabel (15) an einem feststehenden Teil des Rahmens (16) der Vorrichtung (10) angebracht ist, und wobei der Gabelrahmen (17) eine verschiebbare Halterung (23; 24) für die Plattform (19) umfasst, welche eine Bewegung der Plattform ermöglicht, um die Abladebewegung des gewickelten Ballens (14a) zur aufgestapelten Längsposition (14b) zu unterstützen.

4. Vorrichtung nach Anspruch 2 oder 3, wobei die Plattform eine flache oder teilweise gekrümmte Platte (19) umfasst, welche geführt ist, um eine Gleitbewegung relativ zu dem Gabelrahmen (17) auszuführen, wenn der gewickelte Ballen (14a) entladen wird.

5. Vorrichtung nach Anspruch 4, wobei Rollen, Laufschienen oder Gleitschienen verwendet werden, um die Gleitbewegung der Plattform (19) zu führen, und wobei ein elastisches Mittel vorgesehen ist, um dieser Gleitbewegung Widerstand zu leisten und um die Plattform zu einer Ausgangsposition zurückzusetzen, nachdem der Ballen (14a) entladen worden ist.

6. Vorrichtung nach Anspruch 5, wobei das elastische Mittel eine Federanordnung umfasst.

7. Vorrichtung nach einem der Ansprüche 1 bis 6, wobei die Gabel (15) einen Stützrahmen (20) umfasst, welcher ausgeformt ist, um den Ballen (14a) aufzunehmen und zu halten, wobei der Stützrahmen (20) mit der Plattform (19) während der Abladebewegung des Ballens (14a) beweglich ist.

8. Vorrichtung nach einem der Ansprüche 1 bis 7, wobei die Gabel (15a) schwenkbar an dem Wicklerrahmen (17a) angebracht ist, um sich zwischen einer erhöhten Position entlang des Tischs (11a), um ein Entladen des Ballens (14a) von dem Tisch (11a) zur Gabel (15a) zu erleichtern, und einer abgesenkten Position bei oder nahe an der Bodenfläche zu bewegen.

9. Vorrichtung nach Anspruch 1, wobei die Stützmittel eine Rolleneinheit (25) mit wenigstens zwei parallelen Rollen (26) umfassen, welche so angeordnet sind, dass sich ihre Achsen im Wesentlichen senkrecht zu den Achsen der Rollen (12) des Tischs (11) erstrecken.

10. Vorrichtung nach Anspruch 9, wobei ein Endlosgurt (29) um die Rollen (26) der Rolleneinheit (25) herumgeführt ist.

11. Vorrichtung nach Anspruch 9 oder 10, wobei die Rolleneinheit (25) relativ zu dem Rahmen (31) der Gabel in einer Richtung (30) beweglich ist, wenn sie sich in einer verkippten Entladeposition befindet, um das Entladen des gewickelten Ballens (14a) zur aufgestapelten Längsposition (14b) zu erleichtern.

## Revendications

1. Appareil destiné à envelopper les balles (10) qui comprend :
une table d'emballage (11) comprenant au moins deux rouleaux parallèles espacés (12) destinés à recevoir une balle et fonctionnant pour faire tourner la balle de façon générale autour de son axe pendant l'emballage avec un film étiré,
un moyen de maintien destiné à maintenir une bobine de film de matériau plastique étirable,
un moyen destiné à appliquer une rotation relative entre ledit moyen de support et ladite table (11) autour d'un axe vertical s'étendant de façon généralement perpendiculaire à l'axe de la balle (14) de telle sorte que l'emballage de la balle puisse avoir lieu,
un moyen destiné à incliner la table (11) dans une direction perpendiculaire à l'axe des rouleaux (12) de façon à éjecter une balle enveloppée (14a) de la table (11), et
un berceau de réception (15) monté sur le châssis (16) de l'appareil (10) de façon à recevoir la balle enveloppée (14a) lorsque cette dernière est éjectée de la table (11), ladite balle (14a) étant mobile dans une direction généralement perpendiculaire à son axe de façon à être reçue par le berceau (15), et le berceau de réception (15) étant réglable entre une position de réception de balle dans laquelle l'axe de la balle s'étend sensiblement parallèlement à une surface de support (18) sur laquelle se tient l'appareil (10) et une position d'éjection inclinée dans laquelle la balle enveloppée (14a) peut se déplacer généralement dans le sens de la longueur de son axe de façon à prendre une position finale empilée (14b) s'étendant vers le haut depuis la surface de support (18) :
le berceau (15) comprenant des moyens de support (19, 19a, 25) destinés à supporter la balle (14a) lorsqu'elle est reçue par le berceau (15), **caractérisé en ce que** lesdits moyens de support sont mobiles avec le berceau (15) vers la position d'éjection et sont également mobiles par rapport au châssis du berceau (15) dans un sens parallèle au mouvement dans le sens de la longueur de la balle (14a) vers la position empilée (14b), et simultanément avec celui-ci, afin de minimiser un mouvement de glissement relatif entre la surface de la balle enveloppée (14a) et les moyens de support (19, 19a, 25), et ainsi aider le mouvement de la balle.

2. Appareil selon la revendication 1, dans lequel le moyen de support comprend une plate-forme (19, 19a) qui est mobile dans le sens du mouvement de la balle (14a) vers la position empilée.

3. Appareil selon la revendication 2, dans lequel le berceau (15) possède un châssis de montage (17) grâce auquel le berceau (15) est monté sur une partie fixe du châssis (16) de l'appareil (10), et le châssis du berceau (17) comprend un montage pouvant glisser (23, 24) pour la plate-forme (19) qui permet un mouvement de la plate-forme afin d'aider le mouvement de déchargement de la balle enveloppée (14a) vers la position finale empilée (14b).

4. Appareil selon la revendication 2 ou 3, dans lequel la plate-forme comprend une plaque plate ou partiellement incurvée (19) guidée pour effectuer un mouvement de glissement par rapport au châssis du berceau (17) lorsque la balle enveloppée (14a) est éjectée.

5. Appareil selon la revendication 4, dans laquelle des rouleaux, des patins ou des glissières sont ulilisés pour guider le mouvement de glissement de la plate-forme (19), et il est prévu un moyen élastique pour résister à ce mouvement de glissement et pour renvoyer la plate-forme à une position de départ après que la balle (14a) a été éjectée.

6. Appareil selon la revendication 5, dans lequel le moyen élastique comprend un agencement de ressorts.

7. Appareil selon l'une quelconque des revendications 1 à 6, dans lequel le berceau (15) comprend un châssis de support (20) d'une forme adaptée pour recevoir et pour maintenir la balle (14a), ledit châssis de support (20) étant mobile avec la plate forme (19) pendant le mouvement de déchargement de la balle (14a).

8. Appareil selon l'une quelconque des revendications 1 à 7, dans lequel le berceau (15a) est monté pivotant sur le châssis de l'emballeuse (17a) afin de se déplacer entre une position élevée le long de la table (11a) pour faciliter l'éjection de la balle (14a) de la table (11a) vers le berceau (15a) et une position abaissée sur la surface du sol ou proche de celle-ci.

9. Appareil selon la revendication 1, dans lequel le moyen de support comprend une unité de rouleaux (25) constituée d'au moins deux rouleaux parallèles (26) agencés avec leurs axes s'étendant sensiblement perpendiculairement aux axes des rouleaux (12) de la table (11).

10. Appareil selon le revendication 9, dans lequel une courroie sans fin (29) est utilisée autour des rouleaux (26) de l'unité de rouleaux (25).

11. Appareil selon la revendication 9 ou 10, dans lequel l'unité de rouleaux (25) est mobile par rapport au châssis (31) du berceau dans une direction (30), lorsqu'il se trouve dans une position inclinée de déchargement, afin de faciliter l'éjection de la balle enveloppée (14a) vers la position finale empilée (14b).
